# EUROPÄISCHE PATENTSCHRIFT

(11) **EP 0 988 425 B1**
(45) Veröffentlichungstag und Bekanntmachung des Hinweises auf die Patenterteilung: **27.11.2002**
(21) Anmeldenummer: 98934859.4
(22) Anmeldetag: 04.06.1998
(51) Int. Cl.: E02D 5/08

(54) **VERBINDUNGSELEMENT FÜR SPUNDBOHLEN**
CONNECTING ELEMENT FOR SHEET PILES
ELEMENT D'ATTACHE DESTINE A UNE PALPLANCHE METALLIQUE

(30) Priorität: 13.06.1997 DE 19725143
(43) Veröffentlichungstag der Anmeldung: 29.03.2000
(73) Patentinhaber: Wall, Georg, 81375 München (DE)
(72) Erfinder: Wall, Georg, 81375 München (DE)
(74) Vertreter: Haft, von Puttkamer, Berngruber, Czybulka
(86) Internationale Anmeldenummer: DE9801525
(87) Internationale Veröffentlichungsnummer: WO98058131

(56) Entgegenhaltungen:
- WO-A-97/39193
- DE-A- 2 018 119
- DE-A- 3 907 348
- DE-C- 734 616
- DE-U- 29 718 052
- GB-A- 378 575

## Beschreibung

Die Erfindung bezieht sich auf ein Verbindungselement für Spundbohlen gemäß dem Oberbegriff des Patentanspruches 1.

Derartige Verbindungselemente sind in einer Vielzahl von Formen und Ausgestaltungen bekannt; sie dienen dazu, Spundbohlen von Spundwänden miteinander zu verbinden, und zwar insbesondere dann, wenn zwei aneinanderstoßende Spundbohlen von in einem Winkel zueinander verlaufenden Spundwänden miteinander verbunden werden sollen.

Ein bekanntes als Eckprofil 20 bezeichnetes Verbindungselement zum Verbinden der Spundbohlen von Spundwänden, die in einem Winkel von 90° zueinander verlaufen hat etwa S-Profil und weist eine im wesentlichen gerade Stegleiste auf, an deren beiden Seiten zwei entgegengesetzt gerichtete Hakenleisten verlaufen. Die eine der beiden Hakenleisten ist hierbei kleiner ausgebildet als die andere; beide greifen in entsprechende Hakenleisten der zu verbindenden Spundbohlen ein.

Mit diesem Element können nur in einen Winkel von 90° zueinander verlaufende Spundbohlen verbunden werden; beim Rammen der Verbindungselemente passiert es jedoch manchmal, dass die kleinere der Hakenleisten aus der entsprechenden Hakenleiste der anzuschließenden Spundbohle herausspringt, so dass - wenn dieses überhaupt bemerkt wird - die Arbeit unterbrochen und von neuem begonnen werden muss.

Ein weiteres als Delta bezeichnetes und in der DE-OS 20 18 119 beschriebenes Verbindungselement hat wiederum auf einer Seite einer Stegleiste eine kleine Hakenleiste sowie auf der anderen Seite eine im Querschnitt sichelförmige größere Hakenleiste. Dieses Profil hat den Vorteil, dass an der sichelförmigen Hakenleiste Spundbohlen über einen bestimmten Winkelbereich angeschlossen und somit auch Spundwände miteinander verbunden werden können, die in einem anderen Winkel als 90° zueinander verlaufen. Angegeben wird ein Winkel zwischen 90° und 135°. Bei diesem Profil ist die kleinere der Hakenleisten gleich aufgebaut wie bei dem oben erwähnten Eckprofil 20, so dass beim Rammen diese Hakenleiste durchaus aus der korrespondierenden Hakenleiste der anzuschließenden Spundbohle rutschen kann.

Aus diesen Gründen ist es für das oben erwähnte Eckprofil 20 und das Delta-Profil Vorschrift, diese Profile mit ihren kleineren Hakenleisten mit einer der Spundbohle zu verschweißen und erst anschließend diese Anordnung abzurammen. Hierdurch wird der Arbeitsaufwand bei der Erstellung von Spundbohlen erheblich.

Aus der DE-A1-3907348 sind stranggepresste Verbindungselemente bekannt, an denen Spundbohlen des Larssen- aber auch des Knopf-Klauen-Types angeschlossen werden können. Die Verbindungselemente weisen hierzu unterschiedlich geformte Hakenleisten auf, die jdoch, wie aus den dortigen Figuren 4 bis 6 hervorgeht, stets einen Formschluss mit den Schlössern der Spundbohlen erfordern. Damit sind hier die gleichen Schwierigkeiten gegeben wie bei dem oben erwähnten Eckprofil 20; allerdings können durch das Herstellverfahren im Strangguss vielfältigere Formen der Anschlussleisten und geringere Maßtoleranzen als bei den gewalzten Profilen erzielt werden.

Allen drei vorgenannten Profilen ist es eigen, dass sie nur in Verbindung mit einem Spundwandtyp verwendet werden. Die häufigsten Spundbohlen sind solche mit sog. Larssenschlössern, die an ihren beiden Längskanten Hakenabschnitte etwa entsprechend der kleineren Hakenleiste des Verbindungselementes gemäß der oben erwähnten DE-OS 20 18 119 aufweisen. Die Größendimensionen dieser Hakenleisten variieren zudem noch von Hersteller zu Hersteller, so dass Verbindungselemente und Spundbohlen jeweils nur vom gleichen Hersteller verwendet werden können.

Der Erfindung liegt die Aufgabe zugrunde, ein Verbindungselement für Spundbohlen der in Rede stehenden Art anzugeben, das in Verbindung mit bestehenden Spundbohlen-Profilen insbesondere mit Larssenschlössern eingesetzt werden kann und bei dem ein Herausspringen aus der Hakenleiste einer anzuschließenden Bohle vermieden wird. Außerdem soll der Anschlusswinkel von miteinander in einem Winkel verlaufenden Spundwänden deutlich gegenüber dem Stand der Technik vergrößert werden.

Diese Aufgabe ist gemäß der Erfindung durch die Merkmale des Patentanspruches 1 gelöst.

Demgemäß sind die Hakenleisten im Querschnitt C-förmig oder sichelförmig ausgebildet, wobei die Winkelbögen der beiden sichelförmigen Hakenleisten größer als 180° sind und vorzugsweise im Bereich zwischen etwa 225° und 250° liegen. Die Sichelöffnung der einen, oberen Hakenleiste weist hierbei vom Steg weg und beginnt an einem Vorsprung am oberen Teil der zentralen Stegleiste, während die Sichelöffnung der unteren Hakenleiste, die eine kontinuierliche Fortsetzung des unteren Teiles der zentralen Stegleiste ist, in eine im wesentlichen zur Stegleiste parallele und leicht gegen diese geneigte Richtung weist.

Die glatten bogenförmigen Innenwände der beiden Hakenleisten umgreifen die entsprechenden Hakenleisten der anzuschließenden Spundbohlen großzügig, wobei ein Dreipunktkontakt bzw. eine ausreichende Verhakung zwischen den Hakenleisten der anzuschließenden Spundbohlen und den Hakenleisten des Verbindungselementes zustande kommt. Durch diese Art des Umgreifens, insbesondere den Krümmungsverlauf der Hakenleisten in Verbindung mit dem Vorsprung als Anschlag und der leicht gegen die Stegleiste gerichteten Sichelöffnung, wird das Schloss, d.h., die Hakenleiste einer anzuschließenden Spundbohle quasi verriegelt, so dass beim Rammen das Verbindungselement nicht aus der Hakenleiste der anzuschließenden Spundbohle gleiten kann.

Ein weiterer Vorteil ist, dass die über das Verbindungselement gemäß der Erfindung zu verbindenden Spundwände einen Winkel zwischen cirka 45° und etwa 125° einnehmen können, wobei in allen Winkelbereichen eine sichere Verbindung gegeben ist und ein Herausspringen der Hakenleisten auch beim Rammen zuverlässig vermieden wird. Ausschlaggebend für den Winkelbereich ist die Schlossgröße, d.h., Größe der Hakenleisten der zu verbindenden Spundbohlen.

Die großzügig dimensionierten sichelförmigen Hakenleisten gewährleisten nicht nur eine Verhinderung des Herausspringens von Hakenleisten der zu verbindenden Spundbohlen, sondern ermöglichen auch bei zusammenzuschließenden Spundwänden einen relativ großen Toleranzbereich, da durch Verschwenken der Verbindungselemente Maßtoleranzen im Bereich von einigen Zentimetern ausgeglichen werden können.

Weitere Ausgestaltungen der Erfindung gehen aus den Unteransprüchen hervor.

Die Erfindung ist in Ausführungsbeispielen anhand der Zeichnung näher erläutert. In dieser stellen dar:
- Figur 1: eine schematische perspektivische Darstellung eines Verbindungselementes für Spundbohlen gemäß der Erfindung;
- Figur 2: einen Querschnitt durch das Verbindungselement mit einer schematischne Darstellung der damit verbundenen Hakenleisten von zwei Spundbohlen;
- Figur 3: ein durch Trennen des Verbindungselementes gewonnenes Schweißeck mit der Darstellung der Verbindung zu einer Spundbohle.

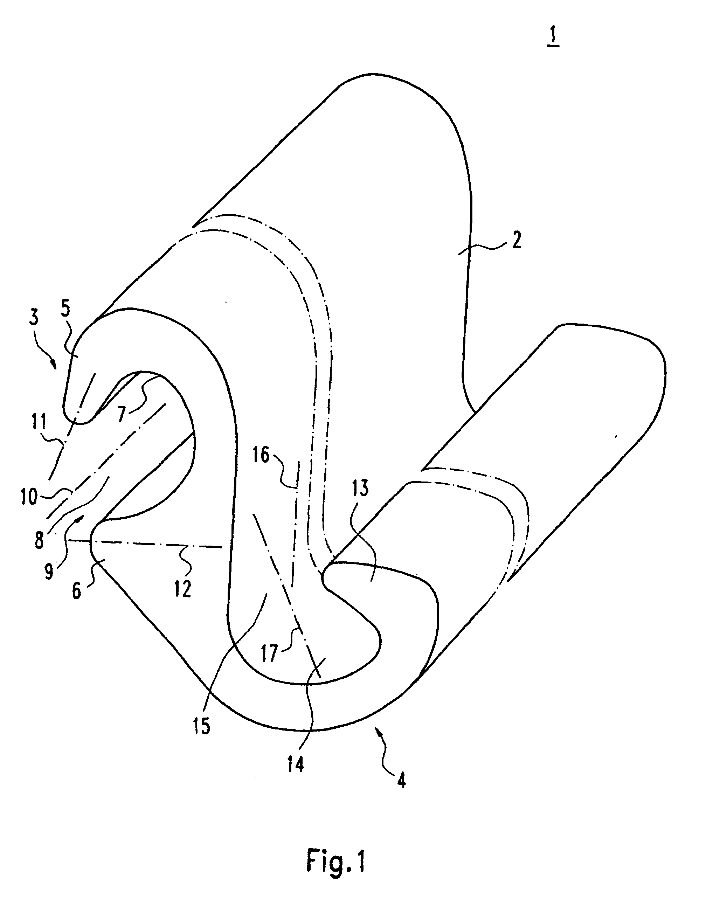

Ein Verbindungselement 1 weist eine zentrale Stegleiste 2 auf, an deren einen Längskante eine erste Hakenleiste 3 und an der anderen Längskante eine zweite Hakenleiste 4 verlaufen, die im folgenden als obere bzw. untere Hakenleisten bezeichnet werden. Die in der Figur rechte Seite der zentralen Stegleiste 2 weist einen mittigen ebenen Abschnitt auf, der im oberen Bereich in einen runden Bogen und schließlich in eine annähernd nach unten weisende Krallenleiste 5 der Hakenleiste 3 übergeht. Auf der dem ebenen Bereich der zentralen Stegleiste gegenüberliegenden Seite weist die Stegleiste einen Vorsprung 6 auf, der den unteren Bereich der Hakenleiste 3 begrenzt. Zwischen der Hakenleiste 5 und dem Vorsprung 6 erstreckt sich annähernd kreisbogen- oder C-förmig eine glatte Innenwand 7, wodurch die Form der Hakenleiste 3 etwa C- oder sichelförmig ist. Die Hakenleiste 3 weist somit einen Innenraum 8 auf, der durch die Innenwand 7 zwischen Krallenleiste 5 und Vorsprung 6 begrenzt ist und eine von der zentralen Stegleiste 2 wegweisende Sichelöffnung 9 hat. In Figur 1 ist strichpunktiert noch eine Mittellinie 10 für die obere Hakenleiste 3 eingezeichnet, die den Innenraum 8 in etwa zwei gleich große Hälften teilt. Man sieht, dass diese Mittellinie 10 nach unten geneigt ist, d.h. gegenüber der vertikalen Richtung des ebenen Bereiches der zentralen Stegleiste einen spitzen Winkel von in diesem Falle ca. 45° aufweist. Mit einer strichpunktierten Linie 11 ist die Richtung der Krallenleiste 5 angedeutet; man sieht, dass diese gegenüber der vertikalen Richtung einen noch spitzeren Winkel von etwa 25 bis 30° aufweist. Mit einer strichpunktierten Linie 12 ist etwa die Richtung des Vorsprunges 6 angegeben, die senkrecht auf dem ebenen Bereich der zentralen Stegleiste 2 steht. Diese Winkel sind natürlich in gewissen Bereichen variierbar. Der Bogen der C- bzw. Sichelform der Hakenleiste 3 zwischen dem Vorsprung 6 und der Krallenleiste 5 geht damit über 180° hinaus und beträgt in diesem Falle annähernd 250°. Gute Ergebnisse für die Verbindung werden mit Winkeln zwischen 210 und 275° erreicht, wobei die Tiefe des Inennraumes 8 der Hakenleiste gemessen zwischen der Sichelöffnung 9 und der Wand der zentralen Stegleiste 2 etwa die Breite der Sichelöffnung 9 hat.

Die untere Hakenleiste 4 ist annähernd identisch aufgebaut zu der oberen Hakenleiste 3, weist somit wiederum eine Krallenleiste 13, einen Innenraum 14 und eine Sichelöffnung 15 auf. Da sich die untere Hakenleiste direkt an den ebenen Bereich der zentralen Stegleiste anschließt, weist die Sichelöffnung etwa parallel nach oben, was durch eine strichpunktierte Linie 16 angedeutet ist. Trägt man wiederum wie bei der Hakenleiste 3 eine Mittellinie 17 des Innenraumes 14 ein, so sieht man, dass diese Linie in einem spitzen Winkel zu der vertikalen Richtung der Stegleiste 2 verläuft, so dass man sagen kann, dass die Sichelöffnung 15 gegen den ebenen Bereich der zentralen Stegleiste geneigt ist bzw. auf diesen zuweist.

Aus dieser Figur 1 ist auch gut ersichtlich, dass der Querschnitt des Verbindungselementes 1 stark an die Form eines Seepferdchens erinnert.

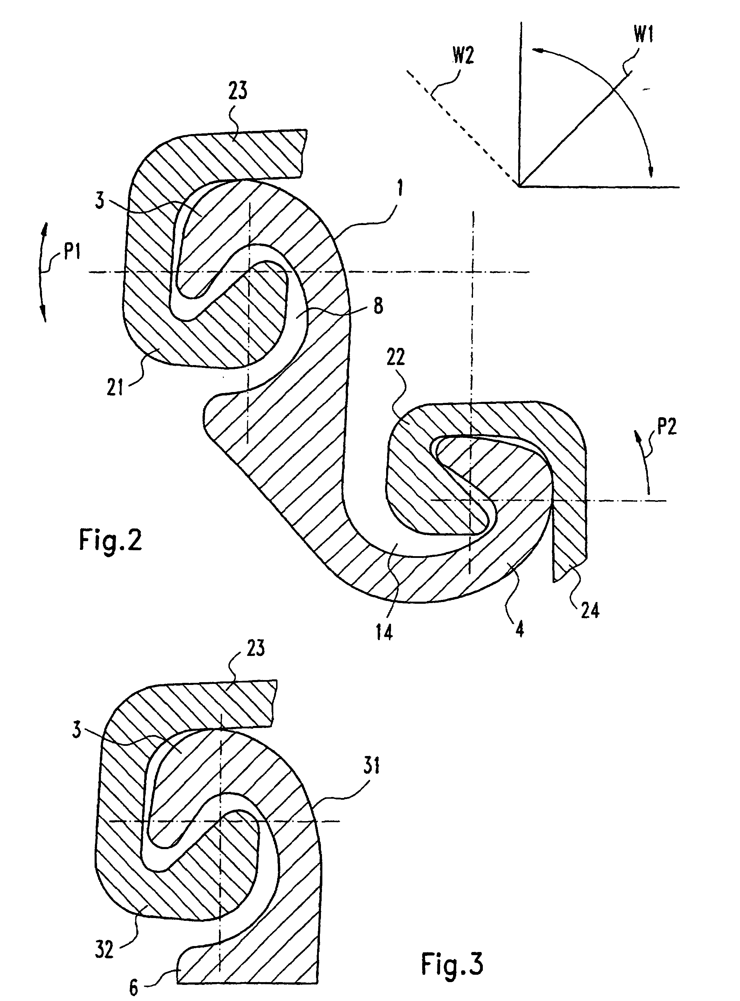

In Figur 2 ist schematisch die Ankoppelung des Verbindungselementes 1 an zwei Hakenleisten 21 und 22 von zu verbindenden Spundbohlen 23 bzw. 24 dargestellt. Man sieht, dass durch die großen C-förmigen Öffnungen der beiden Hakenleisten 3 und 4 des Verbindungselementes 1 die Hakenleisten 21 und 22 gut umgriffen werden und eine sichere Verbindung der beiden Spundbohlen ermöglichen. Außerdem können die Anschlußwinkel der Spundbohlen 23 und 24, wie durch die Pfeile P1 und P2 angedeutet, unterschiedlich sein, wobei in dem Diagramm oberhalb dieser Figur der minimale Anschlusswinkel mit W1 und der maximale Anschlusswinkel mit W2 dargestellt ist. Der minimale Winkel W1 ist ungefähr 45°, der maximale Winkel W2 ungefähr 135°.

Das Verbindungselement kann noch im Bereich des Vorsprunges aufgeschnitten werden (was nicht unter die beanspruchte Erfindung fällt), so dass, wie in Figur 3 gezeigt, sich eine Eck- oder Anschweissleiste 31 ergibt, die mit ihrem dem Vorsprung 6 entsprechenden Fuß an die Wand einer Spundbohle angeschweißt werden kann, so dass in die von der Wand wegragenden Hakenleiste 3 eine weitere Hakenleiste 32 einer anzuschließenden Spundbohle 33 in einem bestimmten Winkel eingeführt werden kann. In Figur 3 entspricht die Eckleiste 31 dem die obere Hakenleiste 3 enthaltenen Teil des Verbindungselementes 1; es ist natürlich möglich, auch den unteren Teil mit der Hakenleiste 4 als Eckleiste zu verwenden.

## Patentansprüche

1. Verbindungselement für Spundbohlen, insbesondere zum Verbinden von zueinander in einem Winkel verlaufenden Spundbohlen, mit einer zentralen Stegleiste (2), an deren beiden Längskanten Hakenleisten, nämlich eine obere Hakenleiste (3) und untere Hakenleiste (4), verlaufen, wobei die Hakenleisten mit ihrer Krümmung in entgegengesetzte Richtungen weisen und in entsprechende Hakenleisten (21, 22) von zu verbindenden Spundbohlen (23, 24) eingreifen können,
**gekennzeichnet durch** die nachfolgenden Merkmale:
a) beide Hakenleisten (3, 4) sind im wesentlichen gleich ausgebildet und weisen eine kontinuierliche sichelförmige Krümmung auf, wobei die Winkelbögen der Krümmung größer als 180° und maximal etwa 250° betragen;
b) am oberen Teil der zentralen Stegleiste (2) ist auf der einen Seite ein Vorsprung (6), der zugleich den Anfang der oberen Hakenleiste (3) bildet und dessen Richtung (Linie 12) etwa senkrecht auf dem auf der anderen Seite liegenden ebenen Bereich der Stegleiste (2) steht;
c) der untere Teil der Stegleiste (2) geht kontinuierlich in die untere Hakenleiste (4) über;
d) eine gedachte Verlängerung (11) in Richtung der Erstreckung des Endes (5) der oberen Hakenleiste (3) weist von der Stegleiste (2) weg und bildet mit einer vertikalen Richtung parallel zum ebenen Bereich der zentralen Stegleiste (2) einen spitzen Winkel von etwa 25° bis 30°;
e) eine Mittellinie (10) **durch** die Öffnung (9) und den Innenraum (8) der oberen Hakenleiste (3) ist nach unten geneigt und bildet mit der Verlängerung des ebenen Bereiches der Stegleiste (2) einen spitzen Winkel von etwa 45°;
f) eine gedachte Verlängerung in Richtung der Erstreckung des Endes (13) der unteren Hakenleiste (4) ist auf die Stegleiste (2) gerichtet;
g) eine Mittellinie (17) **durch** die Öffnung (15) und den Innenraum (14) der unteren Hakenleiste (4) bildet mit dem ebenen Bereich der Stegleiste (2) einen spitzen Winkel.

2. Verbindungselement nach Anspruch 1, **dadurch gekennzeichnet, dass** die Mittellinie (10) für die obere Hakenleiste (3) den Innenraum (8) in etwa zwei gleich große Hälften teilt.

3. Verbindungselement nach Anspruch 1, **dadurch gekennzeichnet, dass** die Mittellinie (17) für die untere Hakenleiste (4) den Innenraum (14) in etwa zwei gleich große Hälften teilt.

4. Verbindungselement nach den Ansprüchen 1 bis 3, **dadurch gekennzeichnet, dass** durch die Ausbildung der Hakenleisten (3, 4) und ihre glatten bogenförmigen Innenwände eine ausreichende Verhakung mit den Hakenleisten (21, 22) der anzuschließenden Spundbohlen (23, 24) gegeben ist und in allen mit den Spundbohlen (23, 24) möglichen Winkelbereichen (etwa zwischen 45° und 135°) eine sichere Verbindung ohne Herausspringen der Hakenleisten (3, 4) zustande kommt.

## Claims

1. A connecting element for sheet piles, in particular for connecting sheet piles extending at an angle relative to each other, comprising a central web bar (2), at the two longitudinal edges of which extend hook bars, namely an upper hook bar (3) and a lower hook bar (4), wherein the hook bars face with their curvature in opposite directions and can engage into corresponding hook bars (21, 22) of sheet piles (23, 24) to be connected, **characterised by** the following features:
a) both hook bars (3, 4) are of substantially identical configuration and have a continuous crescent-shaped curvature, wherein the angular arcs of the curvature are greater than 180° and are at a maximum about 250°;
b) at the upper part of the central web bar (2) on the one side is a projection (6) which at the same time forms the beginning of the upper hook bar (3) and the direction of which (line 12) is substantially perpendicular to the flat region, which is on the other side, of the web bar (2);
c) the lower part of the web bar (2) goes continuously into the lower hook bar (4);
d) a notional prolongation (11) in the direction of the extent of the end (5) of the upper hook bar (3) faces away from the web bar (2) and forms an acute angle of about 25° to 30° with a vertical direction parallel to the flat region of the central web bar (2);
e) a central line (10) through the opening (9) and the internal space (8) of the upper hook bar (3) is inclined downwardly and forms an acute angle of about 45° with the prolongation of the flat region of the web bar (2);
f) a notional prolongation in the direction of the extent of the end (13) of the lower hook bar (4) is directed towards the web bar (2); and
g) a central line (17) through the opening (15) and the internal space (14) of the lower hook bar (4) forms an acute angle with the flat region of the web bar (2).

2. A connecting element according to claim 1 **characterised in that** the central line (10) for the upper hook bar (3) divides the internal space (8) into approximately two halves of equal size.

3. A connecting element according to claim 1 **characterised in that** the central line (17) for the lower hook bar (4) divides the internal space (14) into approximately two halves of equal size.

4. A connecting element according to claims 1 to 3 **characterised in that** the configuration of the hook bars (3, 4) and their smooth arcuate internal walls affords sufficient hooking engagement with the hook bars (21, 22) of the sheet piles (23, 24) to be connected and a secure connection is produced without the hook bars (3, 4) jumping out in all angle ranges which are possible with the sheet piles (23, 24) (approximately between 45° and 135°).

## Revendications

1. Elément de liaison pour palplanches, en particulier pour raccorder des palplanches faisant un angle entre elles, comportant une partie centrale (2), sur les deux côtés longitudinaux de laquelle s'étendent des rebords en forme de crochet, à savoir un rebord supérieur (3) et un rebord inférieur (4), dans lequel les rebords sont recourbés dans des directions opposées et peuvent s'accrocher à des rebords en forme de crochet correspondants (21, 22) de palplanches à raccorder (23, 24), **caractérisé par** les caractéristiques suivantes :
a) les deux rebords en forme de crochet (3, 4) sont pour l'essentiel de même forme et présentent une courbure continue en forme de croissant, les arcs de courbure ayant une valeur plus grande que 180° et au maximum de l'ordre de 250° ;
b) à la partie supérieure de la partie centrale (2) se trouve, d'un côté, une partie saillante (6), qui forme le début du rebord supérieur (3) et dont la direction (ligne 12) est sensiblement perpendiculaire à la région plane se trouvant de l'autre côté de la partie centrale (2) ;
c) la partie inférieure de la partie centrale (2) se raccorde de façon continue au rebord inférieur (4) ;
d) une ligne imaginaire (11) prolongeant la direction de l'extrémité (5) du rebord supérieur (3) s'éloigne de la partie centrale (2) et forme un angle aigu d'environ 25° à 30° avec une direction verticale parallèle à la région plane de la partie centrale (2) ;
e) une ligne médiane (10) située dans l'ouverture (9) et l'espace interne (8) du rebord supérieur (3) est inclinée vers le bas et forme, avec le prolongement de la région plane de la partie centrale (2), un angle aigu d'environ 45° ;
f) une ligne imaginaire prolongeant la direction de l'extrémité (13) du rebord inférieur (4) pointe vers la partie centrale (2) ;
g) une ligne médiane (17) située dans l'ouverture (15) et l'espace interne (14) du rebord inférieur (4) forme un angle aigu avec la région plane de la partie centrale (2).

2. Elément de liaison selon la revendication 1, **caractérisé en ce que** la ligne médiane (10) relative au rebord supérieur (3) partage l'espace interne (8) en deux moitiés sensiblement égales.

3. Elément de liaison selon la revendication 1, **caractérisé en ce que** la ligne médiane (17) relative au rebord inférieur (4) partage l'espace interne (14) en deux moitiés sensiblement égales.

4. Elément de liaison selon les revendications 1 à 3, **caractérisé en ce que**, grâce à la configuration des rebords en forme de crochet (3, 4) et à leurs parois internes lisses en forme de croissant, un accrochage suffisant aux rebords en forme de crochet (21, 22) des palplanches à raccorder (23, 24) est atteint et une liaison sûre sans décrochage des rebords (3, 4) a lieu pour tous les angles possibles (entre 45° et 135° environ) des palplanches (23, 24).
